# EUROPÄISCHE PATENTSCHRIFT

(11) **EP 1 790 431 B1**
(45) Veröffentlichungstag und Bekanntmachung des Hinweises auf die Patenterteilung: **13.02.2008**
(21) Anmeldenummer: 05025848.2
(22) Anmeldetag: 26.11.2005
(51) Int. Cl.: B23Q 11/00

(54) **Spanbrecher mit Absaugvorrichtung**
Chip-breaking with chip-removal device
Dispositif pour briser et aspirer des copeaux

(43) Veröffentlichungstag der Anmeldung: 30.05.2007
(73) Patentinhaber: Cross Hüller GmbH, 71636 Ludwigsburg (DE)
(72) Erfinder: Wagner, Mathias, 74613 Öhringen (DE)
(74) Vertreter: Rau, Manfred

(56) Entgegenhaltungen:
- US-A- 6 126 099
- PATENT ABSTRACTS OF JAPAN Bd. 006, Nr. 101 (M-135), 10. Juni 1982 (1982-06-10) -& JP 57 033943 A (MITSUBISHI HEAVY IND LTD), 24. Februar 1982 (1982-02-24)
- PATENT ABSTRACTS OF JAPAN Bd. 011, Nr. 135 (M-585), 28. April 1987 (1987-04-28) -& JP 61 274840 A (TOSHIBA MACH CO LTD), 5. Dezember 1986 (1986-12-05)
- PATENT ABSTRACTS OF JAPAN Bd. 006, Nr. 146 (M-147), 5. August 1982 (1982-08-05) -& JP 57 066839 A (MITSUBISHI HEAVY IND LTD), 23. April 1982 (1982-04-23)

## Beschreibung

Die Erfindung betrifft eine Späne-Absaug-Vorrichtung nach dem Oberbegriff des Anspruches 1.

Derartige Späne-Absaug-Vorrichtungen werden im Anschluss an spanende Werkzeugmaschinen eingesetzt, aus denen die Späne mittels eines oder zweier Förderer ausgetragen werden. Mittels des Förderers werden die Späne über einen Späne-Brecher transportiert, durch den sie unter Zerkleinerung in einen Sammel-Behälter hindurchfallen. Aus diesem Sammel-Behälter werden sie durch ein Absaug-Rohr abgesaugt. Ein Nachteil dieser bekannten Späne-Absaug-Vorrichtung liegt in ihrem großen Platzbedarf. Außerdem sind die Kosten beträchtlich.

Aus der JP 57 033943 A ist eine Späne-Abtransport-Vorrichtung bekannt. Sie weist ein vertikales Zuführrohr auf. Sie ist weiterhin mit einer Einrichtung zum Zerkleinern der Späne versehen, die zwei gegensinnig antreibbare und ineinander greifende Schnecken mit schneidenden Schneckenstegen aufweist. Die Späne werden zwischen den Schnecken von den Schneckenstegen zerschnitten und fallen nach unten auf ein Förderband.

Aus der JP 61 274840 A ist eine Späne-Absaug-Vorrichtung mit einer Späne-Zuführung durch eine Zuführleitung bekannt. Die Späne werden von Schneidmessern zerkleinert. Diese Schneidmesser sind an um eine vertikale Drehachse drehantreibbaren Armen angebracht. Das Zerschneiden der Späne erfolgt unmittelbar unterhalb des Zufiihrrohrs und direkt über einem nach unten führenden Absaugrohr. Da die Späne durch diese Vorrichtung fast frei hindurchfallen, ist keine zufriedenstellende Zerkleinerung zu erreichen.

Der Erfindung liegt die Aufgabe zugrunde, eine Späne-Absaug-Vorrichtung der gattungsgemäßen Art so auszugestalten, dass sie bei einfachem und kostengünstigem Aufbau nur einen geringen Platzbedarf erfordert.

Diese Aufgabe wird erfindungsgemäß durch die Merkmale im Kennzeichnungsteil des Anspruches 1 gelöst. Der Kern der Erfindung liegt darin, dass die zugeführten Späne bzw. Spänebündel in einer nur flach ausgebildeten Schneid- und Transport-Einrichtung zerkleinert und direkt dem Absaug-Rohr zugeführt werden. Der Gesamtplatzbedarf hierfür ist äußerst gering. Der konstruktive Aufwand und damit auch der Kostenaufwand sind nur gering. Das Absaugen der Späne kann mittels eines gasförmigen Fluids, bevorzugt also Luft, erfolgen. Dies ist insbesondere dann der Fall, wenn die zugeführten Späne trocken sind, also aus einer trockenen spanenden Bearbeitung auf der Werkzeugmaschine stammen. Wenn dagegen die Späne aus einer nassen Bearbeitung stammen, kann es zweckmäßig sein, als Förder-Fluid eine geeignete Flüssigkeit einzusetzen, die dann zusammen mit den Spänen durch das Absaug-Rohr abgeführt wird. Das Absaug-Rohr kann nach oben oder unten geführt sein, wobei bei einer Späne-Abführung nach unten mittels einer Flüssigkeit das Absaugen weitestgehend drucklos, also im Grunde als Spülvorgang erfolgen kann. Durch die Einkapselung des Schneid- und Transport-Rades mittels einer Grundplatte, einer oberen Abdeck-Platte und einer ringförmigen Außenwand wird erreicht, dass jeweils nur die im unmittelbaren Einzugsbereich des Absaug-Rohrs befindlichen zerkleinerten Späne dem Absaug-Fluid-Strom ausgesetzt werden.

Die Späne-Zuführung kann grundsätzlich direkt von der Werkzeugmaschine her erfolgen, wenn die Späne-Absaug-Vorrichtung also unterhalb der Werkzeugmaschine angeordnet ist. Gemäß Anspruch 2 ist es von Vorteil, die Späne der erfindungsgemäßen Vorrichtung mittels mindestens eines Förderers aus der Werkzeugmaschine zuzuführen.

Gemäß Anspruch 3 ist es von Vorteil, wenn die erfindungsgemäße Vorrichtung unterhalb der Werkzeugmaschine oder unterhalb des mindestens einen Förderers angeordnet ist.

Gemäß Anspruch 4 erfolgt die Zuführung der Späne in sehr einfacher Weise.

Nach Anspruch 5 sind das oder die Gegenmesser der Öffnung der Späne-Zuführung unmittelbar zugeordnet, wodurch der Platzbedarf weiter verringert wird.

Die Weiterbildung nach Anspruch 6 stellt sicher, dass die Späne beim Zerschneiden zwischen den Schneid- und Transportarmen und dem Gegenmesser nicht ausweichen können.

Durch die Weiterbildung nach Anspruch 7 wird erreicht, dass zum einen die Späne beim Transport nicht ausweichen können und jeweils nur die im unmittelbaren Einzugsbereich des Absaug-Rohres befindlichen zerkleinerten Späne dem Absaug-Fluid-Strom ausgesetzt werden.

Durch die Ausgestaltung nach Anspruch 8 wird sichergestellt, dass die Späne im Bereich des Absaug-Rohres einem intensiven Fluid-Strom und damit einer hohen Saugwirkung ausgesetzt werden. Dies wird durch die Weiterbildung nach Anspruch 9 unterstützt.

Durch die Weiterbildung nach Anspruch 10 wird erreicht, dass die Späne zuverlässig aus der Späne-Zuführung in den Einzugsbereich der Schneid- und Transport-Arme gelangen.

Durch die Ausgestaltung nach Anspruch 11 wird erreicht, dass auch bei Vorhandensein von zwei Förderern nicht gleichzeitig zwei Transport-Zellen sich unter den Förderern befinden, so dass keine Erhöhung des Antriebs-Drehmomentes erforderlich ist. Dies wirkt sich vorteilhaft auf die Auslegung des Antriebs-Motors aus.

Die Ansprüche 12 und 13 geben optimale Maße für die Höhe des Schneid- und Transport-Rades an.

Weitere Merkmale, Vorteile und Einzelheiten der Erfindung ergeben sich aus der nachfolgenden Beschreibung eines Ausführungsbeispiels anhand der Zeichnung. Es zeigt
- Fig. 1: eine perspektivische Darstellung einer Späne-Absaug-Vorrichtung nach der Erfindung,

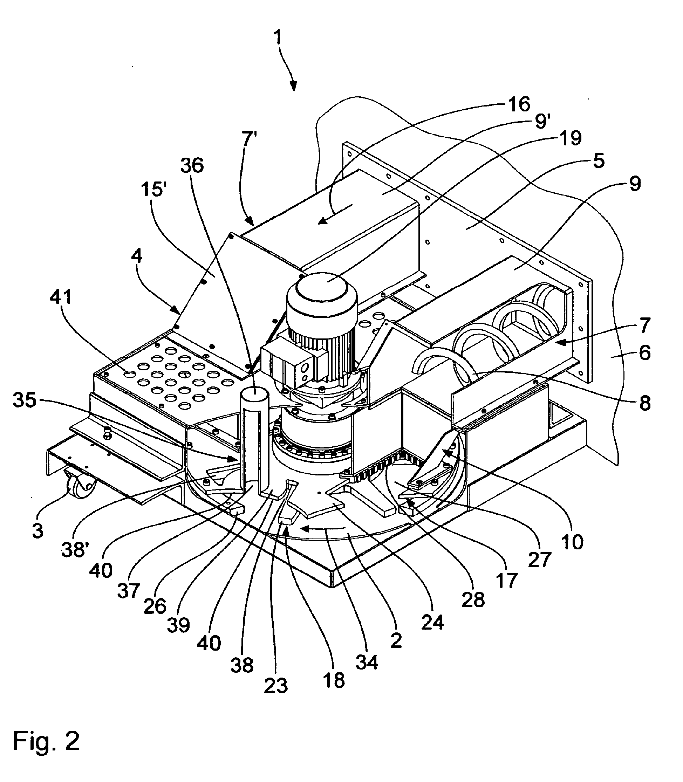

- Fig. 2: eine perspektivische Darstellung der Späne-Absaug-Vorrichtung nach der Erfindung in teilweise aufgebrochener Darstellung,

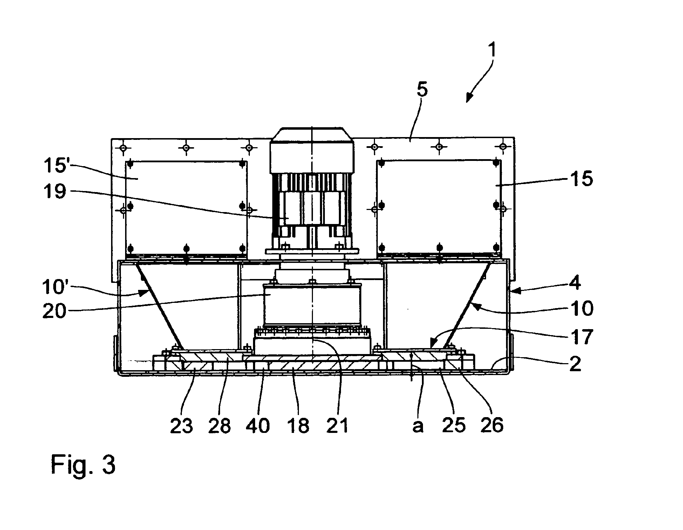

- Fig. 3: einen vertikalen Querschnitt durch die Vorrichtung nach den Fig. 1 und 2,
- Fig. 4: einen Sammel-Trichter der Vorrichtung nach der Erfindung,
- Fig. 5: eine Draufsicht auf ein Schneid- und Transport-Rad der Vorrichtung nach der Erfindung,
- Fig. 6: eine Draufsicht auf eine Austritts-Öffnung eines Sammel-Trichters mit Gegenmessern und
- Fig. 7: einen Teil-Ausschnitt aus dem Bereich der Eintritts-Öffnung eines Absaug-Rohres der Vorrichtung nach der Erfindung.

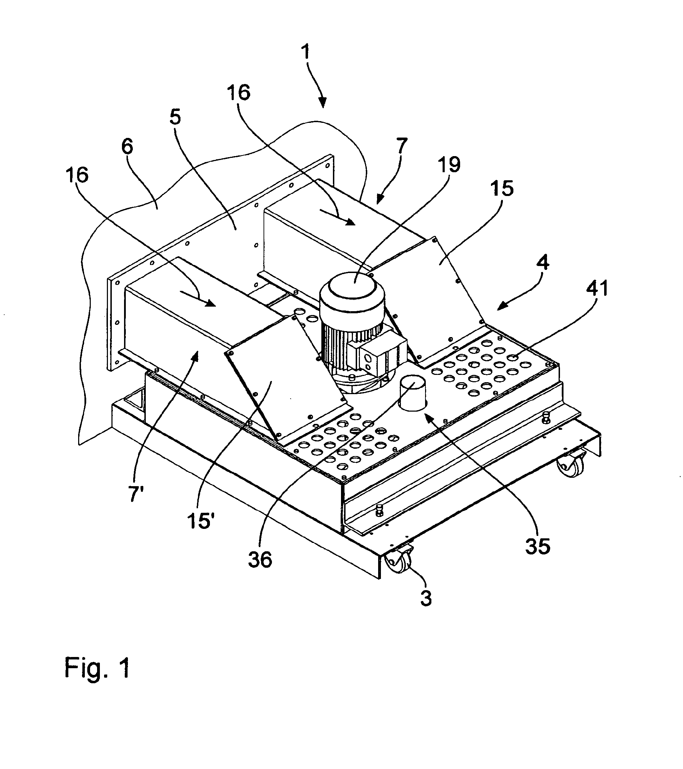

Die in Fig. 1 dargestellte Späne-Absaug-Vorrichtung 1 weist eine Grundplatte 2 auf, die über Rollen 3, auf dem Boden abgestützt ist. Die Grundplatte 2 ist Teil eines aus vielen noch zu erläuternden Einzelteilen bestehenden Gehäuses 4.
Im Bereich seiner Rückseite weist die Vorrichtung einen in Form einer rechteckigen Platte ausgebildeten Anschluss-Flansch 5 auf, mittels dessen die Vorrichtung an eine nur angedeutete spanend arbeitende Werkzeug-Maschine 6 angeschraubt wird. Derartige Werkzeug-Maschinen 6, aus deren unterem Bereich bei der Bearbeitung fallende Späne abgefördert werden, sind in der Praxis umfangreich bekannt und im Einsatz und beispielsweise in der JP 06 091 457 A dargestellt und beschrieben.

Aus der Werkzeug-Maschine münden Förderer 7, 7' aus, mittels derer aus der Werkzeug-Maschine 6 die dort anfallenden Späne herausgefördert werden. Diese Förderer 7, 7' sind schneckenartig ausgebildet und weisen ein schraubenlinienförmig verlaufendes drehantreibbares Förderelement 8 auf. Die beiden Förderelemente 8, von denen nur eines dargestellt ist, ragen aus der Werkzeug-Maschine 6 in parallel zueinander angeordnete, sich an den Abschluss-Flansch 5 anschließend, kastenförmige Förder-Kanäle 9, 9' hinein.

Die Förder-Kanäle 9, 9' münden an ihren dem Abschluss-Flansch 5 abgewandten Ende in unterhalb von ihnen angeordnete, als Sammel-Trichter ausgebildete Zuführ-Schächte 10, 10', die an ihrer Unterseite offen ausgebildet sind. Die Zuführ-Schächte 10, 10' weisen etwa rechteckigen Querschnitt auf und werden durch drei senkrechte Wände 11, 12, 13 und eine geneigte Wand 14 begrenzt. Die Zuführ-Schächte können aber auch sich nach unten erweitern, also gleichsam als auf den Kopf gestellte Trichter ausgebildet sein. Die Späne können also frei im Zuführ-Schacht 10, 10' nach unten fallen. Die geneigte Wand 14 befindet sich jeweils auf der Außenseite des Gehäuses 4. Oberhalb der Zuführ-Schächte 10, 10' sind die Förder-Kanäle 9 jeweils mittels eines abnehmbaren Deckels 15, 15' verschlossen, der unter 45° gegenüber der Förderrichtung 16 der Förderer 7, 7', also gegenüber ihrer Längsrichtung geneigt angeordnet ist, so dass bei einem Stau von Spänen im jeweiligen Zuführ-Schacht 10, 10' eine Zwangsumlenkung der vom jeweiligen Förderer 7, 7' herangeförderten Späne nach unten in den Zuführ-Schacht 10, 10' erfolgt.

Unterhalb der Zuführ-Schächte 10, 10' ist eine Schneid- und Transport-Einrichtung 17 angeordnet. Diese weist ein Schneid- und Transport-Rad 18 auf, das mittels eines Antriebs-Motors 19 über ein Untersetzungs-Getriebe 20 um seine vertikale Mittel-Längs-Achse 21 drehantreibbar ist. Das Rad 18 weist einen inneren nabenförmigen Bereich 22 auf, von dem in gleichen Winkelabständen angeordnete Schneid- und Transport-Arme 23 radial nach außen vorragen. Die Zahl der Arme 23 ist ungerade, so dass sich bei den erwähnten gleichen Winkelabständen der Arme 23 nicht zwei Arme 23 um 180°, also diametral, gegenüberstehen.

Oberhalb des Schneid- und Transport-Rades 18 ist eine obere Abdeck-Platte 24 angeordnet. Zwischen der Grundplatte 2 und der Abdeck-Platte 24, denen gegenüber das Rad 18 in Richtung seiner Mittel-Längs-Achse 21 angenähert spielfrei geführt ist, werden also zwischen benachbarten Armen 23 Transport-Zellen 25 gebildet, deren Höhe a sehr gering ist. Die Transport-Zellen 25 werden radial zur Achse 21 nach außen durch eine ringförmige Außen-Wand 26 abgeschlossen. In den Bereich dieser Transport-Zellen 25 münden die - bezogen auf die Mittel-Längs-Achse 21 - einander diametral gegenüber angeordneten Zuführ-Schächte 10, 10' ein.

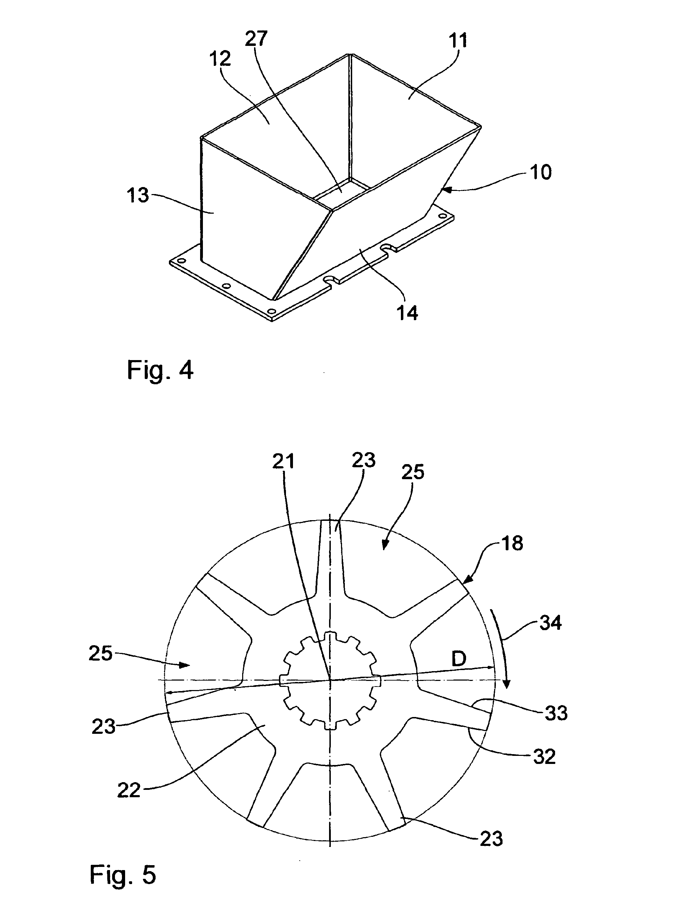

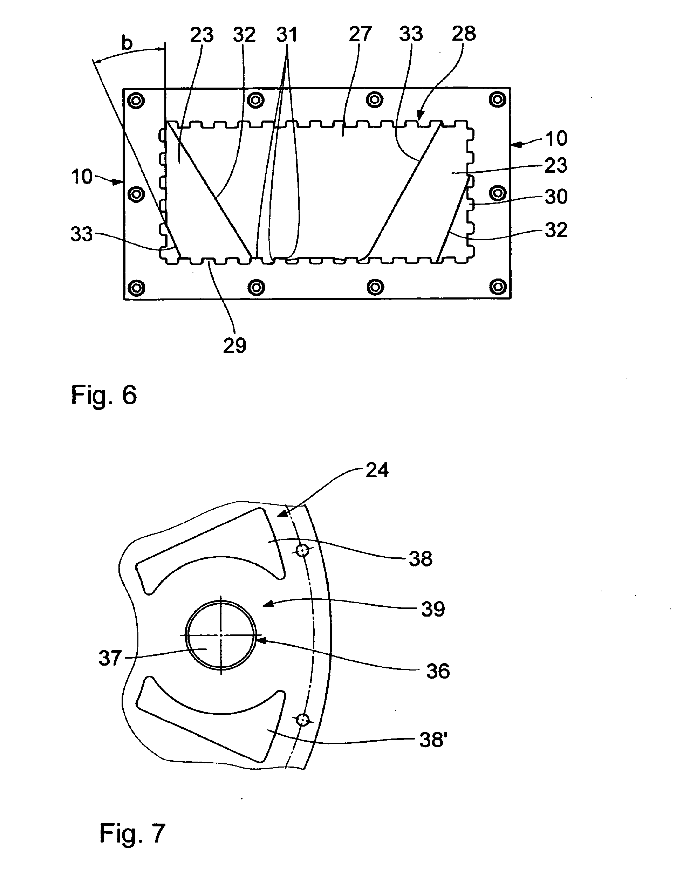

An der unteren Austritts-Öffnung 27 jedes Zuführ-Schachtes 10, 10' sind zahnstangenförmig ausgebildete Gegenmesser 28 angeordnet, wobei zwischen benachbarten Gegenmesser-Zähnen 29 Späne-Halte-Taschen 30 ausgebildet sind. Die Gegenmesser-Zähne 29 sind an ihren freiliegenden Seiten mit Schneidkanten 31 versehen. Die Schneid- und Transport-Arme 18 gleiten mit ihren Schneidkanten 32, 33 dicht an den Schneidkanten 31 der Gegenmesser 28 vorbei. Wie aus der Darstellung eines Schneidwinkels b zwischen einer Schneidkante 32 und einer Schneidkante 31 in Fig. 6 ersichtlich ist, erfolgt zwischen den Schneidkanten 31 einerseits und den Schneidkanten 32 bzw. 33 andererseits zumindest teilweise ein sogenannter ziehender Schnitt, und zwar unabhängig davon, ob die Drehrichtung 34 entsprechend der Darstellung in Fig. 1 und 5 im Uhrzeigersinn oder entgegengesetzt verläuft. Die mittels der Förderer 7, 7' durch die Zuführ-Schächte 10, 10' in die Transport-Zellen 25 geförderten Späne werden also mittels des Schneid- und Transport-Rades 18 abgefördert und hierbei an den Gegenmessern 28 zerkleinert, wobei die Späne nicht ausweichen können, sondern in den Späne-Halte-Taschen 30 gehalten werden, so dass ein sicheres Zerschneiden gewährleistet ist.

Bezogen auf die Förderrichtung 16 hinter und zwischen den Zuführ-Schächten 10, 10', also auf der dem Abschluss-Flansch 5 abgewandten Seite des Gehäuses 4, ist die eigentliche Absaug-Einrichtung 35 vorgesehen. Sie weist ein nach oben geführtes Absaug-Rohr 36 auf, das in die Abdeck-Platte 24 eingesetzt ist und zum Schneid- und Transport-Rad 18 hin offen ist. Seine untere Eintritts-Öffnung 37 für zerschnittene Späne befindet sich - bezogen auf die radiale Erstreckung der Schneid- und Transport-Arme 23 - in der radialen Mitte der jeweiligen Transport-Zelle 25, die unter ihr vorbeiläuft. In der Abdeck-Platte 24 sind zwei Luft-Zuführ-Öffnungen 38, 38' ausgebildet, die - bezogen auf die Drehrichtung 34 des Rades 18 - vor bzw. hinter der Eintritts-Öffnung 37 angeordnet sind. Sie sind derart angeordnet, dass sich immer mindestens eine Luft-Zuführ-Öffnung 38 bzw. 38' über einer Transport-Zelle 25 befindet. Die Luft-Zuführ-Öffnungen 38, 38' weisen eine teil-kreisförmige Begrenzung auf ihrer Innenseite auf, d. h. zwischen diesen Öffnungen 38 bzw. 38' und der Eintritts-Öffnung 37 wird in der Ebene der oberen Abdeck-Platte 24 eine Düsen-Platte 39 gebildet, zwischen der und der Grundplatte 2 ein Düsen-Kanal 40 bzw. 40' gebildet wird, so dass im Grundsatz jeder Bereich einer vorbeiwandernden Transport-Zelle 25 in den Bereich des Düsen-Kanals 40 bzw. 40' gelangt. Hierdurch wird ein intensiver Abtransport der Späne zum Absaug-Rohr 36 hin gewährleistet.

Im Gehäuse 4 sind an der Oberseite der Absaug-Einrichtung 35 Luft-Ansaug-Öffnungen 41 ausgebildet, durch die die Luft angesaugt wird, die dann durch die Luft-Zuführ-Öffnungen 38, 38' in die Transport-Zellen 25 eintritt und unter Mitnahme von Spänen durch das Absaug-Rohr 36 abgeführt wird. Das Absaug-Rohr 36 ist in üblicher Weise an eine Unterdruckquelle, also eine Pumpe, angeschlossen, zwischen der und dem Absaug-Rohr 36 eine Abscheideeinrichtung für die Späne angeordnet ist, wie es in der Praxis allgemein üblich ist.

Das Schneid- und Transport-Rad 18 weist einen Durchmesser D auf. Weiterhin weist es die bereits erwähnte Höhe a auf, die auch die Höhe der Transport-Zellen 25 und des Düsen-Kanals 40 bzw. 40' definiert. Durch diese Höhe a wird auch die Größe der Späne bzw. Späneknäuel vorgegeben, die nach dem Zerkleinern vorliegen. Wenn die Späne zu groß sind und der entsprechende Düsen-Kanal 40, 40' zu hoch ist, dann wird der Abtransport der Späne durch Absaugen schwierig. Es hat sich als zweckmäßig herausgestellt, wenn die maximale Höhe a 5% des Durchmessers D des Schneid- und Transport-Rades 18 entspricht.

Anstelle der Luft als Transport-Fluid für die Späne kann zum einen jedes andere Gas eingesetzt werden. Insbesondere kann aber auch eine Flüssigkeit eingesetzt werden, die im Grundsatz ähnlich zugeführt wird, wie die Luft. Es kann in diesem Zusammenhang dann nur zweckmäßig sein, eine Flüssigkeitszufuhr direkt an die Zuführ-Öffnungen 38 anzuschließen. Wenn die Platzverhältnisse es zulassen, kann das Absaug-Rohr auch nach unten aus der Grundplatte 2 ausmünden. Dies kann insbesondere von Vorteil sein, wenn als Förder-Fluid eine Flüssigkeit eingesetzt wird. Wenn ein freier Abfluss nach unten ermöglicht werden kann, dann kann dies auch nach unten im Wesentlichen ohne Absaugwirkung, lediglich durch Spülung unter Einfluss der Schwerkraft erfolgen, die auch einen gewissen Absaug-Effekt herbeiführt.

Es ist auch möglich, die geschilderte Vorrichtung direkt unter einer Werkzeugmaschine anzuordnen, sodass die dort anfallenden Späne direkt in die Zuführ-Schächte 10 bzw. ggf. auch 10' hineingelangen.

## Patentansprüche

1. Späne-Absaug-Vorrichtung,
- mit einer Späne-Zuführung (7, 7'),
- mit einer Einrichtung zum Zerkleinern der Späne und
- mit einer der Einrichtung zum Zerkleinern der Späne nachgeordneten, ein Absaug-Rohr (36) aufweisenden Absaug-Einrichtung (35) für die Späne,
**dadurch gekennzeichnet, dass**
- dass die Einrichtung zum Zerkleinern der Späne als Schneid- und Transport-Einrichtung (17) ausgebildet ist, die
-- ein in einer Drehrichtung (34) um eine vertikale Mittel-Längs-Achse (21) drehantreibbares Schneid- und Transport-Rad (18) mit jeweils eine Transport-Zelle (25) begrenzenden Schneid- und Transport-Armen (23),
-- eine Grundplatte (2), eine obere Abdeckplatte (24) und eine ringförmige Außenwand (31), die das Schneid- und Transport-Rad (18) umgeben,
-- mindestens ein mit den Schneid- und Transport-Armen (23) zusammenwirkendes Gegenmesser (28),
-- eine in den Bereich der Transport-Zelle (25) einmündende Öffnung (27) zur Zuführung der Späne und
-- eine in eine Transport-Zelle (25) mündende Eintritts-Öffnung (37) des Absaug-Rohres (36)
aufweist.

2. Späne-Absaug-Vorrichtung nach Anspruch 1, **dadurch gekennzeichnet,**
**dass** die Späne-Zuführung durch mindestens einen Förderer (7, 7') gebildet ist.

3. Späne-Absaug-Vorrichtung nach Anspruch 1, **dadurch gekennzeichnet,**
**dass** die Schneid- und Transport-Einrichtung (17) unterhalb der Späne-Zuführung (7, 7') angeordnet ist.

4. Späne-Absaug-Vorrichtung nach Anspruch 1, **dadurch gekennzeichnet,**
**dass** die Späne-Zuführung (7, 7') in einen Zuführ-Schacht (10, 10') mündet, dessen Austritts-Öffnung (27) durch die in den Bereich der Transportzelle (25) einmündende Öffnung gebildet ist.

5. Späne-Absaug-Vorrichtung nach Anspruch 1, **dadurch gekennzeichnet,**
**dass** das mindestens eine Gegenmesser (28) der Öffnung (27) zugeordnet ist.

6. Späne-Absaug-Vorrichtung nach Anspruch 1, **dadurch gekennzeichnet,**
**dass** das Gegenmesser (28) mit einzelnen Gegenmesser-Zähnen (29) versehen ist, zwischen denen jeweils eine Späne-Halte-Tasche (30) ausgebildet ist.

7. Späne-Absaug-Vorrichtung nach Anspruch 1, **dadurch gekennzeichnet,**
**dass** die Transport-Zellen (25) im Wesentlichen geschlossen ausgebildet sind.

8. Späne-Absaug-Vorrichtung nach Anspruch 1, **dadurch gekennzeichnet,**
**dass** um die Eintritts-Öffnung (37) des Absaug-Rohres (36) ein Düsen-Kanal (40, 40') ausgebildet ist.

9. Späne-Absaug-Vorrichtung nach Anspruch 8, **dadurch gekennzeichnet,**
**dass** in den Düsen-Kanal (40, 40') mindestens eine Fluid-Zuführ-Öffnung (38, 38') einmündet.

10. Späne-Absaug-Vorrichtung nach Anspruch 2, **dadurch gekennzeichnet,**
**dass** zwischen dem Förderer (7, 7') und der Öffnung (27) eine Umlenk-Einrichtung (15) für Späne angeordnet ist.

11. Späne-Absaug-Vorrichtung nach Anspruch 2, **dadurch gekennzeichnet,**
**dass** zwei diametral zur Mittel-Längs-Achse (21) des Schneid- und Transport-Rades (18) in die Schneid- und Transport-Einrichtung (17) einmündende Förderer (7, 7') vorgesehen sind und
**dass** das Schneid- und Transport-Rad (18) mit einer ungeraden Zahl von in gleichen Winkelabständen angeordneten Schneid- und Transport-Armen (23) versehen ist.

12. Späne-Absaug-Vorrichtung nach Anspruch 1, **dadurch gekennzeichnet,**
**dass** das Schneid- und Transport-Rad (18) einen Durchmesser D und in Richtung der Mittel-Längs-Achse (21) eine Höhe a aufweist, wobei für das Verhältnis des Durchmesser D zur Höhe a gilt: a ≤ 0,05D.

13. Späne-Absaug-Vorrichtung nach Anspruch 12, **dadurch gekennzeichnet,**
**dass** für die Höhe a des Schneid- und Transport-Rades (18) gilt: 15 mm ≤a≤20mm.

## Claims

1. Chip suction-removal device
- comprising a chip feeder (7, 7'),
- comprising a means for size-reducing the chips and
- comprising a means (35) for removing the chips by suction which is arranged downstream from the means for size-reducing the chips and has a suction tube (36) for the chips,
**characterised in that**
- the means for size-reducing the chips is configured as a cutting and transportation means (17) which has
-- a cutting and transportation wheel (18) which can be driven in a direction of rotation (34) so as to rotate about a vertical centre longitudinal axis (21) and has cutting and transportation arms (23) delimiting a respective transportation cell (25),
-- a base plate (2), an upper cover plate (24) and an annular outer wall (31) which surround the cutting and transportation wheel (18),
-- at least one counter-blade (28) which cooperates with the cutting and transportation arms (23),
-- an opening (27), which merges with the region of the transportation cell (25), for feeding the chips and
-- an inlet opening (37), which merges with a transportation cell (25), in the suction tube (36).

2. Chip suction-removal device according to claim 1, **characterised in that** the chip feeder is formed by at least one conveyor (7, 7').

3. Chip suction-removal device according to claim 1, **characterised in that** the cutting and transportation means (17) is arranged below the chip feeder (7, 7').

4. Chip suction-removal device according to claim 1, **characterised in that** the chip feeder (7, 7') opens into a feed shaft (10, 10'), the outlet opening (27) in which is formed by the opening merging with the region of the transportation cell (25).

5. Chip suction-removal device according to claim 1, **characterised in that** the at least one counter-blade (28) is associated with the opening (27).

6. Chip suction-removal device according to claim 1, **characterised in that** the counter-blade (28) is provided with individual counter-blade teeth (29) between which a respective chip-holding pocket (30) is formed.

7. Chip suction-removal device according to claim 1, **characterised in that** the transportation cells (25) are substantially closed.

8. Chip suction-removal device according to claim 1, **characterised in that** a nozzle channel (40, 40') is formed around the inlet opening (37) in the suction tube (36).

9. Chip suction-removal device according to claim 8, **characterised in that** at least one fluid feed opening (38, 38') merges with the nozzle channel (40, 40').

10. Chip suction-removal device according to claim 2, **characterised in that** a deflection means (15) for chips is arranged between the conveyor (7, 7') and the opening (27).

11. Chip suction-removal device according to claim 2, **characterised in that** there are provided two conveyors (7, 7') which open into the cutting and transportation means (17) diametrically to the centre longitudinal axis (21) of the cutting and transportation wheel (18) and
**in that** the cutting and transportation wheel (18) is provided with an odd number of cutting and transportation arms (23) arranged at identical angular intervals.

12. Chip suction-removal device according to claim 1, **characterised in that** the cutting and transportation wheel (18) has a diameter D and in the direction of the centre longitudinal axis (21) a height a, wherein for the ratio of the diameter D to the height a the following applies: a ≤ 0.05D.

13. Chip suction-removal device according to claim 12, **characterised in that** for the height a of the cutting and transportation wheel (18) the following applies: 15 mm ≤ a ≤ 20 mm.

## Revendications

1. Dispositif d'aspiration de copeaux
- avec un système d'acheminement de copeaux (7, 7')
- avec un dispositif de découpe en menus morceaux des copeaux et
- avec un dispositif d'aspiration (35) pour les copeaux, agencé en aval du dispositif de découpe en menus morceaux des copeaux et muni d'un tube d'aspiration (36),
**caractérisé en ce que**
- le dispositif de découpe en menus morceaux des copeaux est réalisé sous la forme d'un dispositif de coupe et de transport (17), qui comporte
-- une roue de coupe et de transport (18) qui peut être entraînée en rotation dans un sens de rotation (34) autour d'un axe médian longitudinal (21) vertical et qui comporte des bras de coupe et de transport (23) délimitant respectivement une cellule de transport (25),
-- un socle (2), une plaque de recouvrement (24) supérieure et une paroi extérieure (31) annulaire, qui entourent la roue de coupe et de transport (18),
-- au moins un contre-couteau (28) coopérant avec les bras de coupe et de transport (23),
-- une ouverture (27) pour l'admission des copeaux et débouchant dans la zone des cellules de transport (25), et
-- une ouverture d'admission (37) du tube d'aspiration (36), débouchant dans une cellule de transport (25).

2. Dispositif d'aspiration de copeaux selon la revendication 1, **caractérisé en ce que** le système d'acheminement des copeaux est formé par au moins un convoyeur (7, 7').

3. Dispositif d'aspiration de copeaux selon la revendication 1, **caractérisé en ce que** le dispositif de coupe et de transport (17) est agencé en dessous du système d'acheminement des copeaux (7, 7').

4. Dispositif d'aspiration de copeaux selon la revendication 1, **caractérisé en ce que** le système d'acheminement des copeaux (7, 7') débouche dans une cheminée d'admission (10, 10'), dont l'ouverture de sortie (27) est formée par l'ouverture débouchant dans la zone des cellules de transport (25).

5. Dispositif d'aspiration de copeaux selon la revendication 1, **caractérisé en ce qu'**au moins un contre-couteau (28) est associé à l'ouverture de sortie (27).

6. Dispositif d'aspiration de copeaux selon la revendication 1, **caractérisé en ce que** le contre-couteau (28) est muni de dents (29), entre lesquelles est formée respectivement une poche de retenue des copeaux (30).

7. Dispositif d'aspiration de copeaux selon la revendication 1, **caractérisé en ce que** les cellules de transport (25) sont sensiblement fermées.

8. Dispositif d'aspiration de copeaux selon la revendication 1, **caractérisé en ce qu'**un conduit de buse (40, 40') est réalisé autour de l'ouverture d'admission (37) du tube d'aspiration (36).

9. Dispositif d'aspiration de copeaux selon la revendication 8, **caractérisé en ce qu'**un orifice d'admission de fluide (38, 38') débouche dans le conduit de buse (40, 40').

10. Dispositif d'aspiration de copeaux selon la revendication 2, **caractérisé en ce qu'**un dispositif de déviation (15) pour les copeaux est agencé entre le convoyeur (7, 7') et l'ouverture (27).

11. Dispositif d'aspiration de copeaux selon la revendication 2, **caractérisé**
**en ce qu'**il est prévu deux convoyeurs (7, 7') débouchant dans le dispositif de coupe et de transport (17) diamétralement par rapport à l'axe médian longitudinal (21) de la roue de coupe et de transport (18), et
**en ce que** la roue de coupe et de transport (18) est munie d'un nombre impair de bras de coupe et de transport (23) agencés à égale distance angulaire les uns des autres.

12. Dispositif d'aspiration de copeaux selon la revendication 1, **caractérisé en ce que** la roue de coupe et de transport (18) a un diamètre D et une hauteur a dans le sens de l'axe médian longitudinal (21), sachant que pour le rapport du diamètre D sur la hauteur a, on applique a ≤ 0,05 D.

13. Dispositif d'aspiration de copeaux selon la revendication 12, **caractérisé en ce que** pour la hauteur a de la roue de coupe et de transport (18), on applique : 15 mm ≤ a ≤ 20 mm.
